# EUROPEAN PATENT SPECIFICATION

(11) **EP 1 139 340 B1**
(45) Date of publication and mention of the grant of the patent: **16.06.2004**
(21) Application number: 01107617.1
(22) Date of filing: 27.03.2001
(51) Int. Cl.: G11B 7/24, G11B 7/26, C23C 14/20

(54) **Optical recording medium having an oriented silver reflecting layer**
Optisches Aufzeichnungsmedium mit einer orientierten Silberreflexionsschicht
Support d'enregistrement optique comportant une couche réfléchissante d'argent orienté

(30) Priority: 29.03.2000 JP 2000091375
(43) Date of publication of application: 04.10.2001
(73) Proprietor: TDK Corporation, Tokyo 103-8272 (JP)
(72) Inventor: Fukuzawa, Narutoshi, Tokyo 103-8272 (JP)
(74) Representative: Pohlmann, Eckart, Dipl.-Phys.

(56) References cited:
- EP-A- 0 508 478
- PATENT ABSTRACTS OF JAPAN vol. 1995, no. 07, 31 August 1995 (1995-08-31) & JP 07 110964 A (MITSUBISHI CHEM CORP), 25 April 1995 (1995-04-25)

## Description

### BACKGROUND OF THE INVENTION

### Field of the Invention

The present invention relates to an optical recording medium and a method for producing the same, as it is mentioned in the preamble of claim 1 and 5 respectively.

Such an optical recording medium is known from the JP-A-7110964-abstract as from Patents Abstracts of Japan. With this known recording medium the thin film comprising silver as a major component satisfies a relationship of I(200)/I(111) ≤ 0,2 when an X-ray diffraction intensity by a (111) plane is designated as I(111) and by a (200) plane as I(200) in an X-ray diffraction spectrum measured by a θ-2θ method while an angle of incidence with reference to a surface of the light-transmittable substrate is set as θ.

### Disclosure of the Related Art

As a large-capacity information recording medium, optical disks such as recordable type or rewritable type disks having an organic recording layer or an inorganic recording layer based on various recording principles are developed, and with respect to recordable type optical disks having an organic dye recording layer, CD-R and DVD-R are now put into practical use.

A general constitution of this recordable type optical recording medium is such that a recording layer comprising an organic dye as a major component and a reflecting layer made of a metal film formed by the sputtering method are laminated in this order on a light-transmittable substrate, and further a protective layer made of resin is formed on the reflecting layer to cover the reflecting layer. An adhesive type optical recording medium is constituted of two disks sticking firmly to each other using the recordable optical recording medium having the above-mentioned constitution as one side or as both sides via an adhesive layer. Here, a concave guiding groove (generally referred to as a pregroove) is normally formed in advance on the surface of the light-transmittable substrate (the surface of the light-transmittable substrate on the side that is in contact with the recording layer) in order to guide the scanning of laser light to be irradiated so that the laser light accurately tracks the position to be irradiated.

In this recordable type optical recording medium, there is an increasing desire to replace gold with silver as a metal component of the reflecting layer for the pursuit of cost reduction and higher reflecting characteristics, and a reflecting layer comprising silver as a major component (silver reflecting layer) is put into practical use in CD-R and DVD-R. However, silver has a poorer chemical stability than gold. For this reason, an optical recording medium having a silver reflecting layer is liable to raise problems in a high-temperature high-humidity environment, such as decrease in the reflectivity or increase in errors caused by interaction or the like between the reflecting layer and the recording layer, as compared with a reflecting layer comprising gold (gold reflecting layer). These problems have a large influence particularly on a medium with enhanced recording density such as DVD-R. Thus, an optical recording medium having a silver reflecting layer cannot be said to have a sufficiently high durability, so that a further improvement is desired in recent years in which the recording density is enhanced such as in DVD-R.

### SUMMARY OF THE INVENTION

Thus, an object of the present invention is to provide an optical recording medium being excellent in high-temperature high-humidity resistance characteristics while using a silver reflecting layer capable of producing a cost reduction effect and higher reflecting characteristics as compared with a gold reflecting layer. Also, an object of the present invention is to provide a method for producing the aforesaid optical recording medium.

As a result of eager studies on the relationship between the condition of forming a silver film by sputtering and the characteristics after preservation under a high-temperature high-humidity environment in order to improve the high-temperature high-humidity resistance characteristics, the present inventor found that the increase in the errors after preservation under a high-temperature high-humidity environment can be restrained depending on a film-forming condition, although there is no change in the initial reflecting characteristics, in the initial jitter characteristics, and in the initial error characteristics.

Further, as a result of eager studies on the crystal structure of silver in a reflecting layer that produces excellent high-temperature high-humidity resistance characteristics by means of the film-forming condition, the present inventor found out that it is a polycrystal structure of silver satisfying a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by the θ-2θ method while an angle of incidence with reference to the surface of the light-transmittable substrate is set at θ, which is one of the thin film evaluation methods such as disclosed in Japanese Laid-open Patent Publication No. 07-110964 (1995).

The present inventor found that, by forming such a silver polycrystal thin film as a reflecting layer, an excellent long-life CD-R or DVD-R can be produced with restrained waveform distortion and extremely restrained increase in errors after preservation under a high-temperature high-humidity environment, thereby completing the present invention.

Namely, the present invention is an optical recording medium which comprises at least a recording layer comprising an organic dye, a reflecting layer composed of a metal, and a protective layer laminated in this order on a light-transmittable substrate, wherein the reflecting layer is a thin film comprising silver as a major component and satisfying a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by a θ-2θ method while an angle of incidence with reference to a surface of the light-transmittable substrate is set at θ.

In the aforesaid optical recording medium, the depth of a groove formed on the light-transmittable substrate is, for example, from 150 to 200 nm, and the width of the groove is, for example, from 0.2 to 0.4 µm.

In the aforesaid optical recording medium, a groove pitch (distance between adjacent grooves) is, for example, from 0.5 to 1.5 µm.

In the aforesaid optical recording medium, the organic dye in the recording layer is preferably an azo type dye and/or a cyanine type dye.

Further, the present invention is a method for producing an optical recording medium which comprises at least a recording layer comprising an organic dye, a reflecting layer composed of a metal by a sputtering method, and a protective layer laminated in this order on a light-transmittable substrate, said method comprising the step of forming a thin film comprising silver as a major component and satisfying a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by a θ-2θ method while an angle of incidence with reference to a surface of the light-transmittable substrate is set at θ, by controlling a sputtering gas pressure in a sputtering chamber in forming the reflecting layer by the sputtering method.

In the aforesaid method for production, the sputtering gas pressure in the sputtering chamber may be set, for example, within a range from 0.23 to 1.00 Pa.

The present invention can provide an optical recording medium which is excellent in high-temperature high-humidity resistance characteristics while using a reflecting film comprising silver as a major component. This optical recording medium produces a cost reduction effect and higher reflecting characteristics as compared with an optical recording medium comprising a gold reflecting film.

### BRIEF DESCRIPTION OF THE DRAWINGS

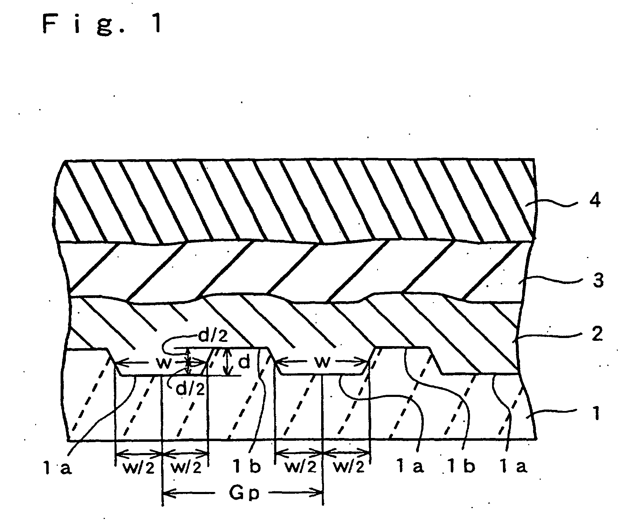

Fig. 1 is a partial cross-sectional view of one example of an optical recording medium of the present invention for describing dimensions in a groove depth (d), a groove width (w), and a groove pitch (Gp).

### DETAILED DESCRIPTION OF THE INVENTION

The constitution of the optical recording medium of the present invention is basically the same as the conventional recordable type optical recording medium. A recording layer comprising an organic dye for recording/reproducing by laser light is formed on a light-transmittable substrate having a pregroove formed therein. A reflecting layer for obtaining light reflectivity is formed on the recording layer. Further, a protective layer for protecting the recording layer and the reflecting layer is formed on the reflecting layer.

An adhesive type optical recording medium is provided by sticking firmly two disks to each other using an optical recording medium having such a layer constitution as one side or as both sides via an adhesive layer. Alternatively, an optical recording medium in which the adhesive layer serves as the protective layer on the reflecting layer is also included in the present invention. Further, an organic protective layer may be formed on the surface of the substrate opposite to the recording layer for enhancing the scuff resistance of the light-transmittable substrate.

As a material for the light-transmittable substrate, for example, a thermoplastic resin including an acrylic resin such as polymethyl methacrylate, polycarbonate resin, polystyrene resin, epoxy resin, polyester resin, vinyl chloride resin, an olefin resin and others, or an inorganic material such as glass may be used. The substrate is provided by transcribing a pregroove of a matrix mainly by injection molding when a resin material is used, or mainly by the 2P method when glass is used. The pregroove is normally formed in a spiral shape. The substrate normally has a thickness of about 1.2 mm for CD-R or about 0.6 mm for DVD-R.

In the present invention, the depth (d) of the groove formed on the light-transmittable substrate is, for example, 150 to 200 nm, preferably from 160 to 190 nm, and the width (w) of the groove is, for example, from 0.2 to 0.4 µm, preferably from 0.25 to 0.35 µm. In the present invention, the groove pitch (Gp) is, for example, from 0.5 to 1.5 µm, preferably from 0.6 to 1.0 µm, more preferably from 0.7 to 0.9 µm. By adopting such a constitution, recording with a high density is achieved.

Fig. 1 is a partial cross-sectional view of an optical recording medium for describing dimensions in the groove depth (d), the groove width (w), and the groove pitch (Gp). Referring to Fig. 1, a groove (1a) and a land (1b) are formed on a surface of a light-transmittable substrate (1). A later-described organic dye recording layer (2) is formed on the substrate (1). A reflecting layer (3) is formed on the recording layer (2), and a protective layer (4) is formed on the reflecting layer (3). The groove width (w) is a groove width at a depth position located at half of the groove depth (d). The groove pitch (Gp) is a distance between adjacent grooves (1a) (1a) and is, for example, a distance between the centers of the adjacent grooves (1a) (1a) in the width (w) direction. If land recording or groove recording is to be carried out in the optical recording medium of the present invention, a track pitch is equal to the groove pitch (Gp). If land & groove recording is to be carried out, a track pitch is different from the groove pitch (Gp).

A recording layer comprising an organic dye as a major component is formed on the substrate.

Examples of the organic dye to be used in the recording layer include cyanine type dyes, phthalocyanine type dyes, naphthalocyanine type dyes, anthraquinone type dyes, azo type dyes, metal-containing azo dyes, triphenylmethane type dyes, squarylium type dyes, croconium type dyes, formazan type dyes, azulenium type dyes, dithiol-metal complex salt type dyes, indoaniline metal complex dyes, and others. Among these, cyanine type dyes and metal-containing azo dyes are preferable in view of large selection capability of solvents for use in spin coating and facility in fine adjustment of absorption wavelength. It is also preferable to use a salt dye formed from a metal-containing azo dye and a cyanine dye. These dyes are used either alone or as a mixture thereof while taking into consideration the light absorption characteristics at around 780 nm for CD-R or at around 630-660 nm for DVD-R. In order to improve the light-resistance, a singlet oxygen quencher, an ultraviolet absorbent, and others may be mixed to form the recording layer. It is also preferable to use an ionically-bonded compound of a dye cation and a singlet oxygen quencher anion, as the organic dye.

In the case of an optical recording medium for DVD-R, a cyanine type dye represented by the general formula (I) may be used as the cyanine type dye. 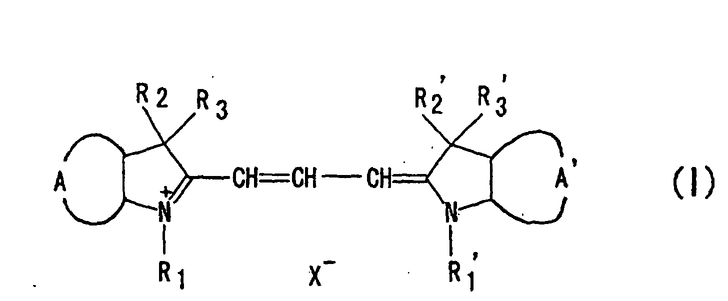 (Here, A and A' each represent independently an aromatic ring that may have at least one substituent or a fused aromatic ring that may have at least one substituent; R₁ and R₁' each represent independently a substituted or non-substituted alkyl group; R₂, R₂', R₃, and R₃' each represent independently a substituted or non-substituted alkyl group or a substituted or non-substituted aryl group; and X- represents an anion.)

Examples of the substituted or non-substituted alkyl groups represented by R₁, R₁', R₂, R₂', R₃, and R₃' include substituted or non-substituted alkyl groups having from 1 to 4 carbon atoms.

Examples of the anion represented by X⁻ include ClO₄⁻, BF₄⁻, PF₆⁻, halogen ions, and others, and ClO₄⁻ is preferable.

In the case of an optical recording medium for DVD-R, a salt dye formed from a metal-containing azo dye and a cyanine dye and represented by the following formula may be used, though not limited thereto. 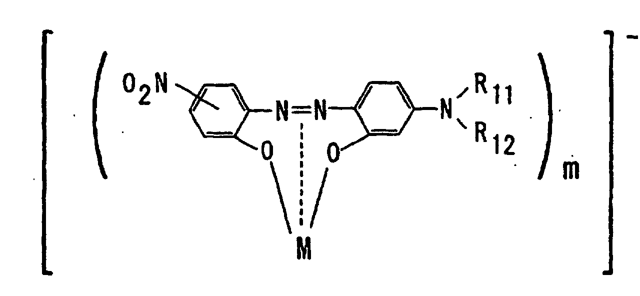 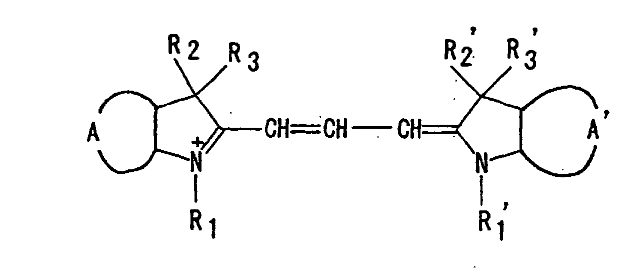 (Here, A and A' each represent independently an aromatic ring that may have at least one substituent or a fused aromatic ring that may have at least one substituent; R₁ and R₁' each represent independently a substituted or non-substituted alkyl group; R₂, R₂', R₃, and R₃' each represent independently a substituted or non-substituted alkyl group or a substituted or non-substituted aryl group; R₁₁ and R₁₂ each represent independently a substituted or non-substituted alkyl group; m represents 1 or 2; and M represents a monovalent, bivalent, or trivalent transition metal.)

Examples of the transition metal represented by M include Ni, Co, Fe, Cu, and others, and Co and Ni are preferable.

Examples of the substituted or non-substituted alkyl groups represented by R₁, R₁', R₂, R₂', R₃, R₃', R₁₁, and R₁₂ include substituted or non-substituted alkyl groups having from 1 to 4 carbon atoms.

The metal-containing azo dye and the cyanine dye are used in a ratio that forms a salt.

Examples of the salt dye represented by the above formula include salt dyes represented by the following formula. 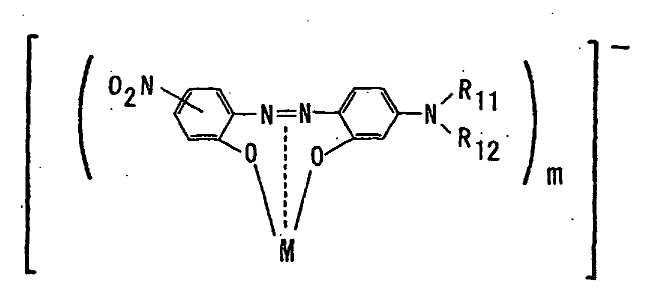 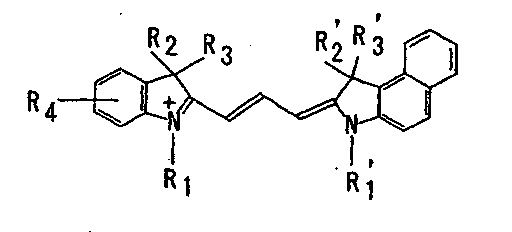 (Here, R₁, R₁', R₂, R₂', R₃, R₃', R₁₁, R₁₂, m, and M have the same meaning as in the above formula. R₄ represents a hydrogen atom, a substituted or non-substituted alkyl group, a substituted or non-substituted aryl group, or a halogen atom.)

Examples of the substituted or non-substituted alkyl groups represented by R₁, R₁', R₂, R₂', R₃, R₃', R₄, R₁₁, and R₁₂ include substituted or non-substituted alkyl groups having from 1 to 4 carbon atoms.

The metal-containing azo dye and the cyanine dye are used in a ratio that forms a salt.

The recording layer may be formed preferably by preparing a coating solution obtained by dissolving an organic dye in an organic solvent and applying the coating solution onto the aforesaid substrate by spin coating. The organic solvent to be used for the coating solution may be suitably selected from alcohol type, ketone type, ester type, ether type, aromatic type, alkyl halide type and others in accordance with the dye to be used. After the spin coating, the coated film is dried in accordance with the needs.

The thickness of the recording layer is suitably selected in accordance with the recording sensitivity to the power of recording light such as laser light, the wavelength to be used, the optical constant of the reflecting layer, the material of the recording layer, and others, and is normally within a range from 50 to 500 nm.

A reflecting layer comprising silver as a major component is formed by the sputtering method using silver or an alloy comprising silver.

The alloy comprising silver may be, for example, an alloy comprising one or more elements selected from gold, copper, palladium, antimony, rhodium, platinum, titanium, molybdenum, zirconium, tantalum, tungsten, vanadium, and others in addition to silver. However, in order to obtain a high reflectivity, the content of Ag is preferably 95 atom% or more.

Since silver is a highly conductive material, the silver thin film is preferably formed by DC sputtering.

In order to obtain a constant film thickness distribution of the thin film comprising silver as a major component (silver thin film) in forming the reflecting layer, it is desirable that a target having a larger diameter than the substrate (having the organic dye film formed thereon) is disposed immediately above the substrate. There are cases in which the substrate is allowed to revolve. The distance between the substrate and the target is generally from 30 to 60 mm. If the distance is less than 30 mm, problems such as damage by heat or large difference in the film thickness distribution in the surface are liable to occur. Conversely, if the distance exceeds 60 mm, there are many collisions between the sputtered target atoms and the sputtering gas, so that the efficiency of utilizing the sputtered target atoms decreases to provide poor productivity.

A gas to be introduced for sputtering is generally an inert rare gas, and argon gas is mainly selected from the standpoint of facility in handling and the costs.

In the present invention, by controlling the sputtering gas pressure in the sputtering chamber, the thin film comprising. silver as a major component and satisfying a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by the θ-2θ method while an angle of incidence with reference to a face of the light-transmittable substrate is set at θ, is formed.

The gas pressure in the sputtering chamber varies in accordance with the distance between the target and the substrate, the setting of the sputtering apparatus, and others. Conventionally, in an apparatus of the same type as was used in the experiment of the present invention, the sputtering is carried out under a gas pressure of about 5 to 10 Pa. It is known in the art that change in the sputtering gas pressure affects the quality of the thin film formed by the sputtering. Generally, at a substrate temperature around room temperature, according as the sputtering gas pressure increases, the sputtering layer has a coarser film constitution, since the sputtering layer grows in a columnar structure. Conversely, according as the sputtering gas pressure decreases, the sputtering layer has a denser film constitution.

In the case of forming a silver thin film, the crystal orientation of the thin film changes when the sputtering is carried out with a varying gas pressure in the sputtering chamber. When the argon gas pressure is within a range of about 0.23 to 8.17 Pa, in an X-ray diffraction spectrum measured by the θ-2θ method while an angle of incidence is set at θ, the relative intensity ratio I(200)/I(111) between the (200) surface and the (111) surface of the face-centered cubic lattice of silver in the thin film crystal decreases according as the argon gas pressure increases. Conversely, the relative intensity ratio I(200)/I(111) increases according as the argon gas pressure decreases.

When the sputtering power is increased or the sputtering time is extended, the relative intensity ratio between the intensities of the aforesaid surfaces changes little if the argon gas pressure remains constant, even though each of the intensities of the two surfaces increases. In other words, it is difficult to control the relative intensity ratio between the two by the sputtering power within a range from 2 kW to 6 kW or by the sputtering time within a range from 1 second to 6 seconds.

In the present invention, when the sputtering is carried out under an argon gas pressure of 0.23 Pa which is near to the critical pressure at which the electric discharge occurs, the relative intensity ratio I(200)/I(111) of the silver thin film is around 0.55 to 0.60. With this medium, the characteristics after a high-temperature high-humidity preservation test (for example, at 80°C and 80% RH, preserved for 100 hours, a so-called archival test) are almost the same as the initial characteristics, and the result is good. It is difficult to provide a silver thin film having a relative intensity ratio I(200)/I(111) larger than this with the use of an ordinary sputtering apparatus currently used, because the electric discharge does not occur stably and continuously even if the argon gas pressure is decreased.

According as the argon gas pressure is increased, the relative intensity ratio I(200)/I(111) decreases. When the sputtering is carried out under an argon gas pressure of 0.73 Pa, a silver thin film having a relative intensity ratio I(200)/I(111) around 0.47 is provided. With this medium, the characteristics after the high-temperature high-humidity preservation test remain almost the same as the initial characteristics, and the result is good. When the sputtering is carried out under an argon gas pressure of 1.00 Pa, a silver thin film having a relative intensity ratio I(200)/I(111) around 0.41 is provided. A medium having a silver film with the relative intensity ratio I(200)/I(111) > 0.40 has practically sufficient high-temperature high-humidity resistance characteristics, since inconvenience during reproduction such as a mosaic does not occur in a commercially available DVD-Video player even after the high-temperature high-humidity preservation test. This shows that the sputtering gas pressure in forming the reflecting film is preferably within a range from 0.23 to 1.00 Pa, more preferably within a range from 0.23 to 0.73 Pa.

Thus, there is a close relationship between the relative intensity ratio I(200)/I(111), i.e. the fine structure of the silver film, and the high-temperature high-humidity resistance characteristics of the optical recording medium. In other words, if the reflecting layer is made of a thin film comprising silver as a major component and having a relative intensity ratio I(200)/I(111) > 0.40, the reflection characteristics, the jitter characteristics, and the error characteristics of the optical recording medium are good even after preservation under a high-temperature high-humidity environment from the practical point of view. The relative intensity ratio I(200)/I(111) is preferably 0.41 or more, more preferably within a range from 0.47 to 0.60. The upper limit of the relative intensity ratio I(200)/I(111) cannot be particularly determined; however, the upper limit is about 0.60 from the standpoint of producing a thin film by sputtering.

On the other hand, according as the relative intensity ratio I(200)/I(111) decreases, the PI errors in particular among the characteristics of the optical recording medium tend to increase after the preservation under the high-temperature high-humidity environment as compared with the characteristics at the initial time. The PI errors are described in "DVD Specifications for Recordable Disc, Ver. 1.0, Part 1, Chapters 2.1.7.3 and 3.2". When the relative intensity ratio I(200)/I(111) is 0.40 or less, inconvenience during reproduction such as a mosaic is liable to occur in a commercially available DVD-Video player.

A study by the present inventor shows that the relationship between the increase/decrease of the argon gas pressure at the sputtering and the magnitude of the relative intensity ratio I(200)/I(111) does not vary among different sputtering apparatus. In a different sputtering apparatus, the absolute intensity of I(200) and I(111) may change when the argon gas pressure remains the same. With the use of any sputtering apparatus, an optical recording medium having practically sufficient high-temperature high-humidity preservation characteristics is provided if a silver thin film having a relative intensity ratio I(200)/I(111) > 0.40 is formed by adjusting the argon gas pressure.

The thickness of the reflecting layer comprising silver as a major component is not particularly limited and is, for example, from about 10 to 500 nm and, in the case of DVD-R, the thickness is from about 50 to 200 nm. The thickness of the silver thin film is generally controlled by the power put into sputtering and/or the sputtering time. However, these conditions vary depending on various factors including a construction such as the size and the shape of the sputtering chamber of the sputtering apparatus, a state such as the magnitude of the magnetic field, a degree of the progress of erosion of the sputtering target (the state of loss that varies in accordance with the extent of use of the sputtering target), and the distance between the substrate and the target, so that the conditions cannot be briefly described.

The thickness of the silver thin film may also be controlled by varying the amount of argon gas to be introduced into the sputtering chamber. If the amount of introduced argon gas is small, the electric discharge by the sputtering is less likely to occur, so that the thickness of the silver thin film becomes small. If the amount of introduced argon gas is extremely large, the mean free path of the sputtered target atoms becomes small, so that the thickness of the silver thin film becomes small in this case as well. For this reason, the amount of argon gas to be introduced is set within a range such that electric discharge occurs stably and continuously and the mean free path is not too small. In a conventional case, the amount of argon gas to be introduced was generally within a range from 10 to 100 sccm. In the present invention, in order to set the gas pressure in the sputtering chamber to be within a range from 0.23 to 1.00 Pa, the amount of argon gas to be introduced is preferably within a range from 2 to 10 sccm if, for example, CD-Coat1200 (manufactured by Shibaura Co., Ltd.) is to be used as the sputtering apparatus. In this range, the thickness of the film formed tends to increase according as the amount of introduced argon gas increases.

A protective layer is formed on the aforesaid reflecting layer. The material that constitutes the protective layer is not particularly limited as long as the protective layer can protect the recording layer and the reflecting layer. An ultraviolet-curable type resin, in particular an ultraviolet-curable acrylic type resin, is preferably used as the material for the protective layer in view of reasons such as facility in forming the protective layer. The protective layer is formed by applying an ultraviolet-curable type resin onto the reflecting layer so that the thickness after curing is from 2 to 20 µm, followed by curing by ultraviolet ray irradiation. The application is preferably carried out by the spin coating method in order to avoid damages to the reflecting layer; however, the application may be carried out by the screen printing method, the dipping method, the spray coating method, or the like.

Thus, an optical recording medium of the present invention is provided.

If an adhesive type optical recording medium is to be produced, the provided optical recording medium is further used as one side or as both sides and stuck firmly via an adhesive layer. The sticking agent for use in the adhesive layer is, for example, a heat-curable type adhesive, an ultraviolet-curing type adhesive, a hot-melt adhesive, a sticky adhesive, or the like. In view of workability and productivity, the sticking agent is preferably an ultraviolet-curable type adhesive. The adhesive layer may be formed by the spin coating method or the screen printing method.

### EXAMPLES

Hereafter, the present invention is described more specifically with reference to Examples and Comparative Examples; however, the present invention is not limited to these Examples alone.

### [Example 1]

A polycarbonate substrate with a diameter of 120 mm and a thickness of 0.6 mm and having a periodically meandering groove and a land part with a pre-pit formed thereon, was used as an light-transmittable substrate.

Referring to Fig. 1, the groove depth (d) was 170 nm, the groove width (w) was 0.29 µm, and the groove pitch (Gp) was 0.74 µm.

A salt dye formed from a metal-containing azo dye and a cyanine dye and represented by the following structural formula was used as a dye for a recording layer. This dye was dissolved in tetrafluoropropanol to prepare a coating solution at 2 wt%, and this coating solution was applied onto the aforesaid substrate by the spin coating method so that the film thickness thereof at the land after drying was to be 60 nm.

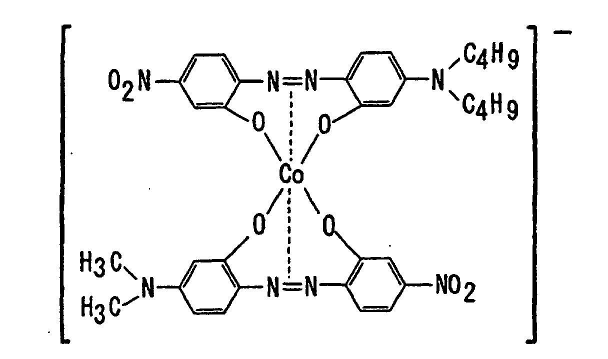

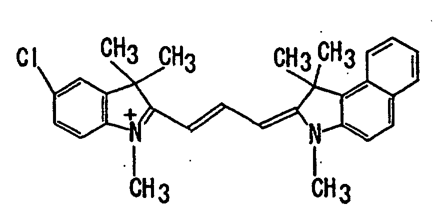

Subsequently, a silver thin film with an average thickness of 190 nm was formed as a reflecting layer on the organic dye recording layer by the DC magnetron sputtering method using a sputtering apparatus under a condition with a film forming argon gas pressure of 0.23 Pa (amount of argon gas introduced into the sputtering chamber: 2 sccm), a film forming power of 4 kW, a target-substrate distance of 47 mm, and a film forming time of 4 seconds. As the sputtering apparatus, CD-Coat1200 (manufactured by Shibaura Co., Ltd.) was used.

An X-ray diffraction spectrum was measured with respect to the silver thin film formed under this condition. The measurement was carried out using JDX8030 manufactured by JEOL Co., Ltd., and the measuring condition was such that the X-ray for use was Cu-kα beam generated with a tube voltage of 50 kV and a tube current of 40 mA and made monochromatic, a wide-angle goniometer was used with the divergence angle of the divergent slit being 1°, the divergence angle of the scattering slit being 1°, the width of the light-receiving slit being 0.4 mm, and the scanning speed of 1.20°/min, and the counting was carried out with the sampling width of 0.04°. The relative intensity ratio I(200)/I(111) was 0.58.

An ultraviolet-curable type resin SD-318 (manufactured by Dainippon Ink Chemical Co. , Ltd.) was applied onto this reflecting layer by the spin coating method so that the thickness after curing was to be 6 µm, followed by ultraviolet ray irradiation with an ultraviolet ray irradiation apparatus for curing to form a protective layer.

Two sheets of the obtained optical recording medium were firmly stuck in the following manner. An ultraviolet-curable type adhesive SK7000 (manufactured by Sony Chemical Co., Ltd.) was applied onto the protective layer of each of the two sheets of the optical recording medium by the screen printing method, followed by ultraviolet ray irradiation to stick firmly the two media so that the protective layers thereof faced each other.

With respect to the obtained optical recording medium, an EFM signal was recorded with the optimal recording laser power (Po) at a linear velocity of 3.5 m/sec using an evaluation apparatus DDU-1000 (manufactured by Pulsetec Industry Co., Ltd.), and a high-temperature high-humidity preservation test (80°C, 80% RH, preserved for 100 hours) was carried out. The PI errors before and after the test were evaluated at n = 5 (radius: from 23 to 25 mm). The decoder for the PI errors was M-5298E (manufactured by Kenwood Co., Ltd.). Further, after the above-mentioned test, a real apparatus reproduction test was carried out using five different types of commercially available DVD-Video players. As a result of this, no increase in the average PI errors was seen even after the high-temperature high-humidity preservation test, nor was there any problem at all in the reproduction by the commercially available DVD-Video players, thereby showing good characteristics.

Table 1 shows a film forming condition for forming a silver thin film, an increase ratio of the PI errors caused by the high-temperature high-humidity preservation test, and reproduction evaluation by the DVD-Video players.

### (Reproduction evaluation)

Normal reproduction: the case in which none of the five different types of DVD-Video players raised a problem in reproduction. Poor reproduction: the case in which an inconvenience such as a mosaic occurred in any one of the five different types of DVD-Video players.

### [Example 2]

An optical recording medium was produced in the same manner as in Example 1 except that the film forming power for forming the silver thin film was set to be 3 kW, and an evaluation was carried out in the same manner as in Example 1. The ratio I(200)/I(111) was 0.55.

### [Example 3]

An optical recording medium was produced in the same manner as in Example 1 except that the film forming power for forming the silver thin film was set to be 2 kW, and an evaluation was carried out in the same manner as in Example 1. The ratio I(200)/I(111) was 0.54.

### [Example 4]

An optical recording medium was produced in the same manner as in Example 1 except that the film forming power for forming the silver thin film was set to be 3 kW and the film forming time was set to be 5 seconds, and an evaluation was carried out in the same manner as in Example 1. The ratio I(200)/I(111) was 0.56.

### [Example 5]

An optical recording medium was produced in the same manner as in Example 1 except that the film forming power for forming the silver thin film was set to be 3 kW and the film forming time was set to be 3 seconds, and an evaluation was carried out in the same manner as in Example 1. The ratio I(200)/I(111) was 0.49.

### [Example 6]

An optical recording medium was produced in the same manner as in Example 1 except that the film forming power for forming the silver thin film was set to be 3 kW and the argon gas pressure was set to be 0.53 Pa (amount of introduced argon gas: 5 sccm), and an evaluation was carried out in the same manner as in Example 1. The ratio I(200)/I(111) was 0.49.

### [Example 7]

An optical recording medium was produced in the same manner as in Example 1 except that the film forming power for forming the silver thin film was set to be 3 kW and the argon gas pressure was set to be 0.73 Pa (amount of introduced argon gas: 7 sccm), and an evaluation was carried out in the same manner as in Example 1. The ratio I(200)/I(111) was 0.47.

### [Example 8]

An optical recording medium was produced in the same manner as in Example 1 except that the film forming power for forming the silver thin film was set to be 3 kW and the argon gas pressure was set to be 1.00 Pa (amount of introduced argon gas: 10 sccm), and an evaluation was carried out in the same manner as in Example 1. The ratio I(200)/I(111) was 0.41.

### [Comparative Example 1]

An optical recording medium was produced in the same manner as in Example 1 except that the film forming power for forming the silver thin film was set to be 3 kW and the argon gas pressure was set to be 1.45 Pa (amount of introduced argon gas: 15 sccm), and an evaluation was carried out in the same manner as in Example 1. The ratio I(200)/I(111) was 0.38.

### [Comparative Example 2]

An optical recording medium was produced in the same manner as in Example 1 except that the film forming power for forming the silver thin film was set to be 3 kW and the argon gas pressure was set to be 2.75 Pa (amount of introduced argon gas: 30 sccm), and an evaluation was carried out in the same manner as in Example 1. The ratio I(200)/I(111) was 0.28.

### [Comparative Example 3]

An optical recording medium was produced in the same manner as in Example 1 except that the film forming power for forming the silver thin film was set to be 3 kW and the argon gas pressure was set to be 4.32 Pa (amount of introduced argon gas: 50 sccm), and an evaluation was carried out in the same manner as in Example 1. The ratio I(200)/I(111) was 0.17.

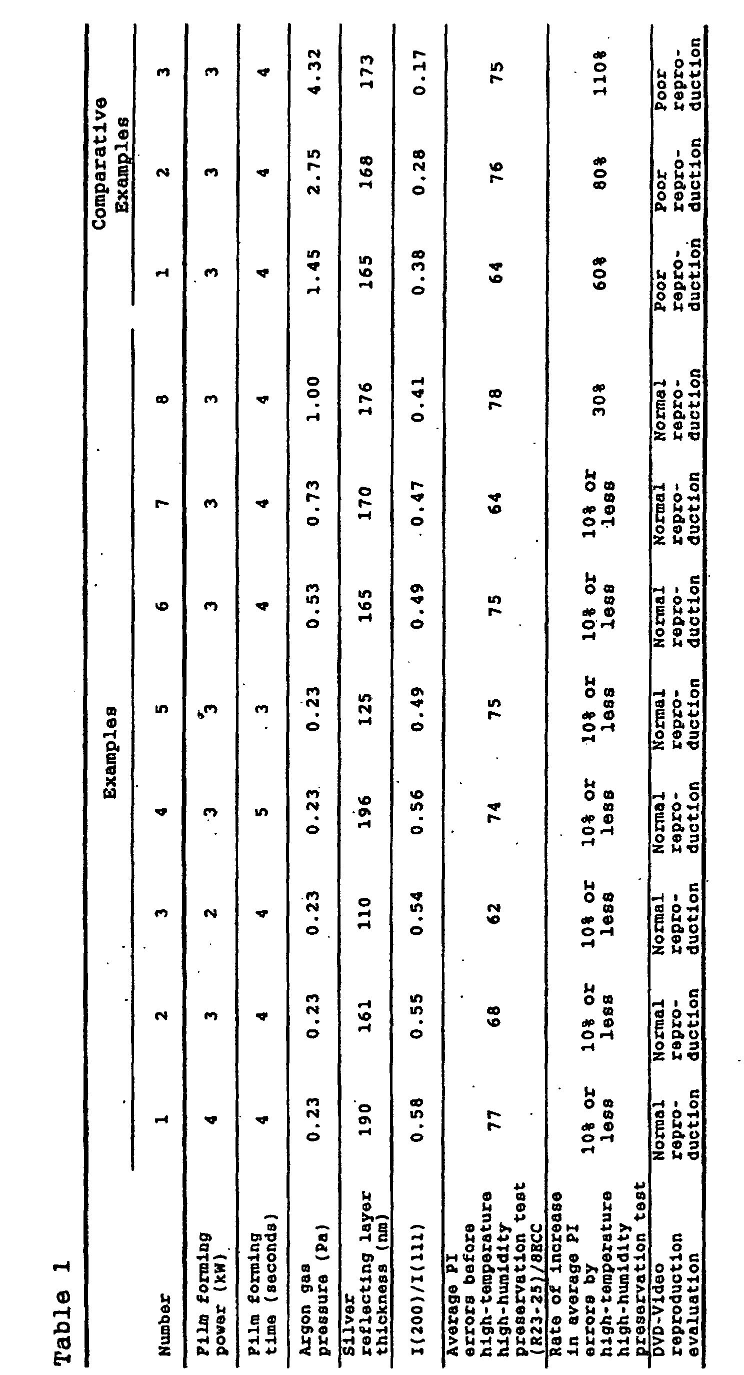

Table 1 shows a tendency in which the intensity ratio I(200)/I(111) increases according as the argon gas pressure is reduced.

In Examples 1 to 8, the increase in the PI errors was not seen or was little after the high-temperature high-humidity preservation test, and there was no poor reproduction by DVD-Video players. Examples 1 to 7 in which the ratio I(200)/I(111) ≥0.47, produced especially good results. Therefore, it has been demonstrated that a highly reliable disk is provided when the relative intensity ratio satisfies the relationship of I(200)/I(111) > 0.40.

On the other hand, in Comparative Examples 1 to 3, a significant increase in the PI errors was seen after the high-temperature high-humidity preservation test, and there was a poor reproduction by a DVD-Video player.

The present invention can be carried out in any other modes without departing from the spirit or major characteristics thereof. Accordingly, the above-described Examples are provided for purposes of illustration only and are not intended to be limiting. Further, any modification in a scope equivalent to the claims is within the scope of the present invention.

## Claims

1. An optical recording medium which comprises at least a recording layer (2) comprising an organic dye, a reflecting layer (3) composed of a metal, and a protective layer (4) laminated in this order on a light-transmittable substrate (1), wherein the reflecting layer (3) is a thin film comprising silver as a major component **characterized in that** the thin film satisfies a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by a θ-2θ method while an angle of incidence with reference to a surface of the light-transmittable substrate (1) is set at θ.

2. The optical recording medium according to claim 1, wherein a depth of a groove formed on the light-transmittable substrate (1) is from 150 to 200 nm, and a width of the groove is from 0.2 to 0.4 µm.

3. The optical recording medium according to claim 1, wherein a groove pitch is from 0.5 to 1.5 µm.

4. The optical recording medium according to any one of claims 1 to 3, wherein the organic dye in the recording layer (2) is an azo type dye and/or a cyanine type dye.

5. A method for producing an optical recording medium which comprises at least a recording layer comprising an organic dye, a reflecting layer composed of a metal by a sputtering method, and a protective layer laminated in this order on a light-transmittable substrate, said method comprising the step of forming a thin film comprising silver as a major component **characterized in that** the thin film is formed such that it satisfies a relationship of I(200)/I(111) > 0.40 when an X-ray diffraction intensity by a (111) plane is designated as I(111) and an X-ray diffraction intensity by a (200) plane is designated as I(200) in an X-ray diffraction spectrum measured by a θ-2θ method while an angle of incidence with reference to a surface of the light-transmittable substrate is set at θ, by controlling a sputtering gas pressure in a sputtering chamber in forming the reflecting layer by the sputtering method.

6. The method for producing an optical recording medium according to claim 5, wherein the sputtering gas pressure in the sputtering chamber is set within a range from 0.23 to 1.00 Pa.

## Patentansprüche

1. Optischer Aufzeichnungsträger mit wenigstens einer Aufzeichnungsschicht (2), die einen organischen Farbstoff umfasst, einer reflektierenden Schicht (3) aus einem Metall und einer Schutzschicht (4), die in dieser Reihenfolge auf ein lichtdurchlässiges Substrat (1) geschichtet sind, wobei die reflektierende Schicht (3) ein dünner Film ist, der Silber als Hauptbestandteil umfasst, **dadurch gekennzeichnet, dass** der dünne Film der Beziehung I(200)/I(111) > 0,40 genügt, wenn die Röntgenstrahlbeugungsstärke durch eine (111) Ebene mit I(111) und die Röntgenstrahlbeugungsstärke durch eine (200) Ebene als I(200) in einem Röntgenstrahlbeugungsspektrum bezeichnet wird, das nach einem θ-2θ Verfahren gemessen wurde, wobei der Einfallswinkel bezüglich einer Oberfläche des lichtdurchlässigen Substrates (1) gleich θ ist.

2. Optischer Aufzeichnungsträger nach Anspruch 1, bei dem die Tiefe einer Rille, die auf dem lichtdurchlässigen Substrat (1) ausgebildet ist, 150 bis 200 nm beträgt und die Breite der Rille 0,2 bis 0,4 µm beträgt.

3. Optischer Aufzeichnungsträger nach Anspruch 1, bei dem die Ganghöhe der Rillen 0,5 bis 1,5 µm beträgt.

4. Optischer Aufzeichnungsträger nach einem der Ansprüche 1 bis 3, bei dem der organische Farbstoff in der Aufzeichnungsschicht (2) ein Azofarbstoff und/oder ein Cyaninfarbstoff ist.

5. Verfahren zum Herstellen eines optischen Aufzeichnungsträgers, der wenigstens eine Aufzeichnungsschicht, die einen organischen Farbstoff umfasst, eine reflektierende Schicht, die durch ein Aufdampfverfahren aus einem Metall gebildet wird und eine Schutzschicht umfasst, die in dieser Reihenfolge auf eine lichtdurchlässiges Substrat geschichtet werden, welches Verfahren die Schritte der Bildung eines dünnen Films aus Silber als Hauptbestandteil umfasst, **dadurch gekennzeichnet, dass** der dünne Film so ausgebildet wird, dass er der Beziehung I(200)/I(111) > 0,40 genügt, wenn die Röntgenstrahlbeugungsstärke durch eine (111) Ebene als I(111) und die Röntgenstrahlbeugungsstärke durch eine (200) Ebene als I(200) in einem Röntgenstrahlbeugungsspektrum bezeichnet wird, das mit einem θ -2θ Verfahren gemessen wurde, wobei der Einfallswinkel bezüglich einer Oberfläche des lichtdurchlässigen Substrates bei θ liegt, indem der Aufdampfgasdruck in einer Aufdampfkammer beim Bilden der reflektierenden Schicht durch das Aufdampfverfahren gesteuert wird.

6. Verfahren zum Herstellen eines optischen Aufzeichnungsträgers nach Anspruch 5, bei dem Aufdampfgasdruck in der Aufdampfkammer auf einen Wert im Bereich von 0,23 bis 1,00 Pa festgelegt wird.

## Revendications

1. Support d'enregistrement optique qui comprend au moins une couche d'enregistrement (2) contenant un colorant organique, une couche réfléchissante (3) composée d'un métal, et une couche protectrice (4), stratifiées dans cet ordre sur un substrat transmettant la lumière (1); où la couche réfléchissante (3) est une couche mince contenant de l'argent à titre de composant majoritaire, **caractérisé en ce que** la couche mince satisfait la relation I(200)/I(111) > 0,40 lorsque l'intensité de la diffraction des rayons X selon le plan (111) est désignée par I(111) et l'intensité de la diffraction des rayons X selon le plan (200) est désignée par I(200) dans un spectre de diffraction des rayons X mesuré selon une méthode θ-2θ en fixant à θ l'angle d'incidence par rapport à la surface du substrat transmettant la lumière (1).

2. Support d'enregistrement optique selon la revendication 1, dans lequel la profondeur d'une rainure formée sur le substrat transmettant la lumière (1) est comprise entre 150 et 200 nm, et la largeur de la rainure est comprise entre 0,2 et 0,4 µm.

3. Support d'enregistrement optique selon la revendication 1, dans lequel le pas des rainures est compris entre 0,5 et 1,5 µm.

4. Support d'enregistrement optique selon l'une quelconque des revendications 1 à 3, dans lequel le colorant organique de la couche d'enregistrement (2) est un colorant du type azoïque et/ou un colorant du type cyanine.

5. Procédé de fabrication d'un support d'enregistrement optique qui comprend au moins une couche d'enregistrement contenant un colorant organique, une couche réfléchissante composée d'un métal issu d'un procédé de pulvérisation cathodique, et une couche protectrice, stratifiées dans cet ordre sur un substrat transmettant la lumière, ledit procédé comprenant une étape consistant à former une couche mince contenant de l'argent à titre de composant majoritaire, **caractérisé en ce que** la couche mince est formée de façon à satisfaire la relation I(200)/I(111) > 0,40 lorsque l'intensité de la diffraction des rayons X selon le plan (111) est désignée par I(111) et l'intensité de la diffraction des rayons X selon le plan (200) est désignée par I(200) dans un spectre de diffraction des rayons X mesuré selon une méthode θ-2θ en fixant à θ l'angle d'incidence par rapport à la surface du substrat transmettant la lumière, en contrôlant la pression du gaz de pulvérisation cathodique dans la chambre de pulvérisation pendant la formation de la couche réfléchissante par le procédé de pulvérisation cathodique.

6. Procédé de fabrication d'un support d'enregistrement optique selon la revendication 5, dans lequel la pression du gaz de pulvérisation cathodique dans la chambre de pulvérisation cathodique est réglée dans la plage s'étendant de 0,23 à 1,00 Pa.
